# FASCICULE DE BREVET EUROPEEN

(11) **EP 2 979 430 B1**
(45) Date de publication et mention de la délivrance du brevet: **18.11.2020**
(21) Numéro de dépôt: 14718673.8
(22) Date de dépôt: 25.03.2014
(51) Int. Cl.: H04L 29/08, H04L 29/06, H04L 12/58

(54) **TECHNIQUE DE COOPÉRATION ENTRE UNE PLURALITÉ D'ENTITÉS CLIENTES**
VERFAHREN ZUR ZUSAMMENARBEIT ZWISCHEN MEHREREN CLIENT-EINHEITEN
TECHNIQUE OF CO-OPERATION BETWEEN A PLURALITY OF CLIENT ENTITIES

(30) Priorité: 29.03.2013 FR 1352889
(43) Date de publication de la demande: 03.02.2016
(73) Titulaire: ORANGE, 75015 Paris (FR)
(72) Inventeur: HUIBAN, Yoann, F-22700 Perros Guirec (FR)
(86) Numéro de dépôt international: PCT/FR2014/050701
(87) Numéro de publication internationale: WO 2014/155001

(56) Documents cités:
- US-A1- 2004 224 772

## Description

L'invention concerne une technique de coopération entre une pluralité d'entités clientes ou dispositifs terminaux participant à une communication instantanée.

Les échanges entre les utilisateurs de terminaux s'effectuent de plus en plus de manière instantanée grâce à des logiciels de conversation ou « chat » en anglais. Ces logiciels s'enrichissent en termes de fonctionnalités et deviennent de plus en plus des logiciels de communication instantanée. Les utilisateurs peuvent ainsi s'échanger par l'intermédiaire d'un canal associé à une conversation des messages textuels mais également des photos, des vidéos, des fichiers,...

Cependant, l'intégration de nouvelles fonctionnalités dans ces logiciels de communication instantanée est complexe. Il est généralement nécessaire d'installer une nouvelle version du logiciel au niveau du terminal ou bien d'un serveur. A titre d'exemple illustratif, dans le cas de services développés dans le cadre de l'initiative RCS (pour « Rich Communication Suite »), les cycles de mise à jour sont supérieurs à six mois.

Le document brevet WO2010/017281 décrit un procédé permettant à deux utilisateurs communiquant par l'intermédiaire d'une conversation instantanée de partager des informations relatives à une application de gestion de calendrier. Le premier utilisateur envoie une invitation au deuxième utilisateur pour exécuter l'application de gestion de calendrier dans le contexte de la conversation. Suite à un accord du deuxième utilisateur toujours dans ce contexte, une fenêtre s'ouvre sur les terminaux des deux utilisateurs. Le premier utilisateur visualise son propre calendrier ainsi que les indisponibilités du deuxième utilisateur. Il peut alors proposer un rendez-vous au deuxième utilisateur. On constate dans ce procédé que l'application de gestion de calendrier doit être au préalable installée sur les deux terminaux ou mise à disposition par l'intermédiaire d'un serveur central. De plus, les informations relatives à l'application de gestion de calendrier sont obtenues à partir d'un serveur d'application centralisé prévu dans le réseau de communication. Ceci rend le fonctionnement de l'application de gestion de calendrier plus difficile à mettre en œuvre. Au niveau des terminaux des utilisateurs, deux applications sont exécutées de manière indépendante, en dehors de l'invitation et de la transmission d'un accord ou refus : l'application de conversation instantanée et l'application de gestion de calendrier. Les interactions entre les deux applications sont limitées.

Le document US-2004224772 décrit une méthode et appareil pour la gestion des jeux d'ordinateur en réseau en utilisant la communication instantanée.

L'invention est décrite dans les revendications indépendantes.

On appelle entité cliente un dispositif terminal participant au service de communication instantanée.

Ainsi, grâce au procédé de coopération, il est possible à un utilisateur de transmettre à un autre utilisateur participant à une communication instantanée une application exécutable dans le contexte de celle-ci. Une relation de confiance est établie entre les différents participants à la communication instantanée. La diffusion de l'application est alors de type viral entre les participants à la communication instantanée. Ceci permet de mettre à disposition d'un participant une application exécutable, de manière simple et rapide. Il n'est donc pas nécessaire que l'ensemble des participants dispose d'un même logiciel préalablement à la communication instantanée. De manière générale, la probabilité que l'ensemble des participants dispose d'une même application est très faible, sauf si l'administrateur du service de communication instantanée définit une liste d'applications exécutables dans le contexte de ce service. De plus, il n'est pas nécessaire de rechercher l'application exécutable sur un serveur du réseau de communication en vue d'un téléchargement. Le parcours client est ainsi simplifié, puisque le participant ne doit pas quitter la communication instantanée, aller chercher l'application dans un magasin d'applications, télécharger et installer l'application, obtenir les droits d'utilisation de l'application puis revenir à la communication instantanée.

Par ailleurs, ce n'est pas l'administrateur du service de communication instantanée qui définit une liste d'applications exécutables dans le contexte de ce service. Une telle liste est par ailleurs limitée du fait des capacités mémoire des entités clientes.

On souligne ici que dans le document brevet WO2010/017281 il est nécessaire de contacter un serveur mettant en œuvre l'application de gestion de calendrier pour pouvoir fournir ce service aux participants à la communication instantanée. Lors de la mise en œuvre du procédé de coopération, seul le serveur mettant en œuvre le service de communication instantanée intervient pour transmettre les messages entre les différents participants. Il n'est donc pas nécessaire de disposer d'un serveur dans le réseau pour mettre en œuvre l'application.

L'exécution de l'application s'effectue dans l'application de communication instantanée. En effet, cette dernière dispose d'un interpréteur d'instructions de code, tel qu'un interpréteur Javascript.

Les différents modes ou caractéristiques de réalisation mentionnés ci-après peuvent être ajoutés indépendamment ou en combinaison les uns avec les autres, aux étapes du procédé de coopération tel que défini précédemment.

Dans un mode de réalisation particulier, la coopération entre l'application en cours d'exécution sur la première entité cliente et celle en cours d'exécution sur la deuxième entité cliente s'effectue au moyen de messages relatifs à l'application et transmis par l'intermédiaire dudit au moins un canal de communication instantané.

On appelle messages relatifs à l'application des données de synchronisation entre les exécutions en coopération de l'application.

On souligne ici que dans le document brevet WO2010/017281 les échanges associés à l'exécution de l'application ne se font pas dans le contexte de la communication instantanée, c'est-à-dire par l'intermédiaire du canal de communication instantanée. Seule l'autorisation d'accès aux données mémorisées dans le calendrier est transmise au moyen du canal de communication instantanée.

Au contraire, la transmission des messages relatifs à l'application s'effectuant par l'intermédiaire du ou d'un des canaux de communication instantanée, il n'est pas nécessaire d'établir d'autres moyens de communication dédiés à l'exécution de l'application entre les entités clientes. Ceci simplifie la gestion de contextes applicatifs au niveau de l'entité cliente et évite une multiplication d'exécution d'applications.

L'ensemble des entités clientes participant à la communication instantanée coopère ainsi par l'intermédiaire du ou d'un des canaux de communication instantanée pour l'exécution de l'application transmise par l'une d'entre elles.

Lorsque plus de trois entités clientes participent à la communication instantanée, elles reçoivent ainsi l'ensemble des messages techniques émis par les autres entités clientes lors de l'exécution de l'application.

Selon une caractéristique particulière du procédé, les messages relatifs à l'application sont uniquement traités par l'application.

Les messages relatifs à l'application sont transparents pour l'utilisateur de l'entité cliente. Ceci permet d'éviter d'encombrer la fenêtre associée à la communication instantanée par de nombreux messages textuels transmis par les autres utilisateurs participants.

Selon une caractéristique particulière du procédé, l'application exécutable est transférée sous la forme d'un fichier indiquant qu'il contient du code exécutable.

L'entité cliente réceptrice du fichier peut ainsi déclencher une exécution de l'application, sous réserve d'un accord de l'utilisateur de l'entité cliente réceptrice.

Selon un deuxième aspect, l'invention concerne également une entité cliente comprenant :
- un module de communication instantanée, agencé pour communiquer avec au moins une autre entité cliente par l'intermédiaire d'au moins un canal de communication instantanée établi ;
- un module d'envoi, agencé pour envoyer une application exécutable à au moins une autre entité cliente par l'intermédiaire dudit au moins un canal de communication instantanée ;
- un module d'exécution, agencé pour exécuter une application en coopération avec une exécution de ladite application sur l'autre entité cliente

Les avantages énoncés pour le procédé selon le premier aspect sont transposables directement à l'entité cliente.

Dans un mode de réalisation particulier, l'entité cliente comprend un module de réception, agencé pour recevoir d'une autre entité cliente par l'intermédiaire d'un canal de communication instantanée une application exécutable à exécuter en coopération avec ladite autre entité cliente.

Selon un troisième aspect, l'invention concerne en outre un système comprenant une pluralité d'entités clientes communiquant entre elles par l'intermédiaire d'au moins un canal de communication instantanée établi entre les entités clientes de ladite pluralité, dans lequel lesdites entités clientes comprennent :
- un module de communication instantanée, agencé pour communiquer avec au moins une autre entité cliente par l'intermédiaire d'au moins un canal de communication instantanée établi,
- un module d'exécution, agencé pour exécuter une application en coopération avec une exécution de ladite application sur l'autre entité cliente.
et dans lequel une entité cliente comprend en outre un module d'envoi, agencé pour envoyer une application exécutable à une autre entité cliente par l'intermédiaire dudit au moins un canal de communication instantanée et l'autre entité cliente comprend un module de réception, agencé pour recevoir de l'entité cliente par l'intermédiaire dudit au moins un canal de communication instantanée ladite application exécutable à exécuter en coopération avec l'entité cliente.

Selon un quatrième aspect, l'invention concerne un programme pour une entité cliente, comprenant des instructions de code de programme destinées à commander l'exécution des étapes du procédé de coopération précédemment décrit, lorsque ce programme est exécuté par cette entité cliente et un support d'enregistrement lisible par une entité cliente sur lequel est enregistré un programme pour une entité cliente.

Les avantages énoncés pour le procédé de coopération selon le premier aspect sont transposables directement au programme pour une entité cliente et au support d'enregistrement.

L'invention sera mieux comprise à l'aide de la description suivante de modes de réalisation particuliers de la technique de coopération, en référence aux dessins annexés sur lesquels :
- la figure 1 représente un système de coopération dans un réseau de communication ;
- les figures 2a-2e illustrent un exemple de mise en œuvre du procédé de coopération selon un mode particulier de réalisation de l'invention ;
- la figure 3 illustre les échanges entre des entités clientes lors de la mise en œuvre du procédé de coopération selon un mode particulier de l'invention;
- la figure 4 représente une entité cliente selon un mode particulier de l'invention.

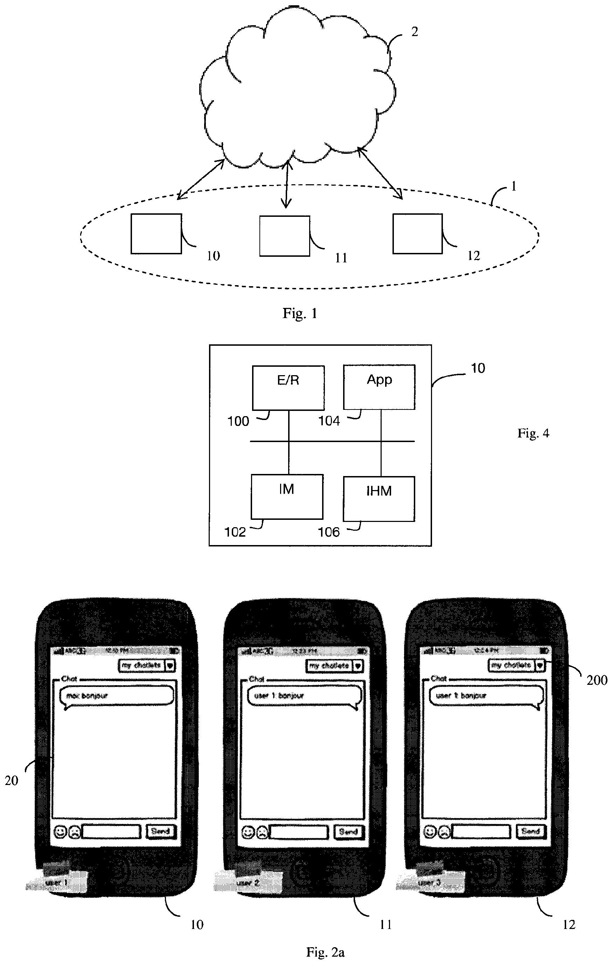

La figure 1 représente un système de coopération 1 dans un réseau de communication. Le système de coopération 1 comprend une pluralité d'entités clientes 10, 11, 12 qui communiquent par l'intermédiaire d'un ou de plusieurs canaux de communication instantanée établis entre elles. Tel que représenté à la figure 1, les échanges entre les entités clientes 10, 11, 12 s'effectuent via un réseau d'accès 2.

Plus précisément, les entités clientes 10, 11, 12 exécutent une application de communication instantanée leur permettant d'échanger des messages textes, des fichiers audio et/ou vidéo, ...

Une entité cliente 10, 11, 12 correspond par exemple à un terminal mobile, à un ordinateur personnel, à une tablette,...

Le réseau d'accès 2 correspond par exemple à un réseau d'accès sans fil, à un réseau mobile, à un réseau informatique,...

On se place par la suite dans le cas où l'infrastructure associée à l'application de communication instantanée est conforme à celle définie par la norme RCS (pour « Rich Communition Suite ») / Joyn™ de la GSMA. Aucune limitation n'est attachée à ce type d'infrastructure. A titre d'autre exemple, une infrastructure d'échange de données conforme au protocole XMPP (pour « Extensible Messaging and Presence Protocol ») permet également de mettre en œuvre la technique de coopération.

La technique de coopération dans un mode de réalisation particulier permet à une première entité cliente d'envoyer une application exécutable à au moins une deuxième entité cliente par l'intermédiaire du ou des canaux de communication instantanée et d'exécuter ensuite cette application en coopération avec une exécution de ladite application sur la deuxième entité cliente. On souligne ici que, lorsque la communication instantanée comprend plus de trois participants, la première entité cliente transmet l'application à chaque deuxième entité cliente participant à la communication instantanée, l'exécution en coopération s'exécutant ensuite sur l'ensemble des entités clientes (sous réserve qu'elles aient accepté cette exécution). La coopération s'entend ainsi par une coopération sur l'ensemble des entités clientes participant à la communication instantanée.

Une telle application exécutable transmise par l'intermédiaire du ou d'un des canaux de communication instantanée est appelée par la suite « chatlet ».

Un « chatlet » est composé d'instructions écrites dans un langage disponible nativement sur l'ensemble des entités clientes. Il s'agit par exemple du langage Javascript.

Un « chatlet » est diffusé à l'initiative d'un des participants de la conversation instantanée à destination des autres participants. Cette diffusion s'effectue au moyen de la fonctionnalité de partage de fichier proposée dans le cadre de l'application de communication instantanée. Un type de contenu permet d'indiquer aux terminaux des autres participants que le fichier transmis comprend du code exécutable et est à exécuter dans le contexte de la communication instantanée. On appelle code exécutable aussi bien du code compilé à partir de programmes écrits en langages de programmation, tels que le langage C ou Java, que du code interprété programmé sous la forme de scripts, tels que les langages Javascript, Perl, Python.

Le « chatlet » s'exécute ensuite sur les différentes entités clientes et lors de cette exécution, les « chatlet » coopèrent entre eux afin de partager des informations relatives à l'exécution du « chatlet ».

Dans un mode de réalisation particulier, la coopération entre l'application « chatlet » en cours d'exécution sur la première entité cliente et celle en cours d'exécution sur la deuxième entité cliente s'effectue au moyen de messages relatifs à cette application et transmis par l'intermédiaire du ou d'un des canaux de communication instantanée.

Par la suite, de tels messages relatifs à l'application sont appelés des messages techniques. Ces messages techniques ne s'affichent pas dans une fenêtre associée à la communication instantanée ouverte sur l'entité cliente. Un message technique comprend notamment un identifiant de l'application app_id concernée, un type d'événement evt et un identifiant de l'utilisateur.

A titre illustratif, une interface de programmation d'applications API (pour « Applications Programming Interface ») est mise à disposition des utilisateurs des entités clientes et comprend un ensemble de fonctions élémentaires à partir desquels un utilisateur peut programmer une application « chatlet ». Les fonctions élémentaires comprennent :
- des fonctions élémentaires propres à la communication instantanée, telles qu'une émission de messages techniques, de messages textes associés à la communication instantanée, un accès à une liste de participants à la communication instantanée, ...
- des fonctions élémentaires permettant d'accéder à des fonctions propres au terminal du participant, telles qu'une géolocalisation, une émission de messages courts SMS (pour « Short Message Service »), une fonction d'appel téléphonique, un calendrier de l'utilisateur du terminal,...
- d'autres fonctions, par exemple de facturation.

Une fois cette application « chatlet » programmée, elle est par exemple mise à disposition de l'utilisateur de l'entité cliente par l'intermédiaire d'un magasin d'applications. Lorsqu'il accède à ce magasin d'applications, l'utilisateur peut ainsi sélectionner une application « chatlet » qu'il souhaite exécuter en coopération avec les autres participants à la communication instantanée.

Les interfaces de programmation d'applications API « chatlet » peuvent également être natives et intégrées dans la norme RCS.

A titre d'exemple illustratif, la figure 2a représente les trois entités clientes 10, 11, 12. Le magasin d'application est accessible au moyen d'un menu déroulant 200 situé dans une zone de l'écran 20 de l'entité cliente 10.

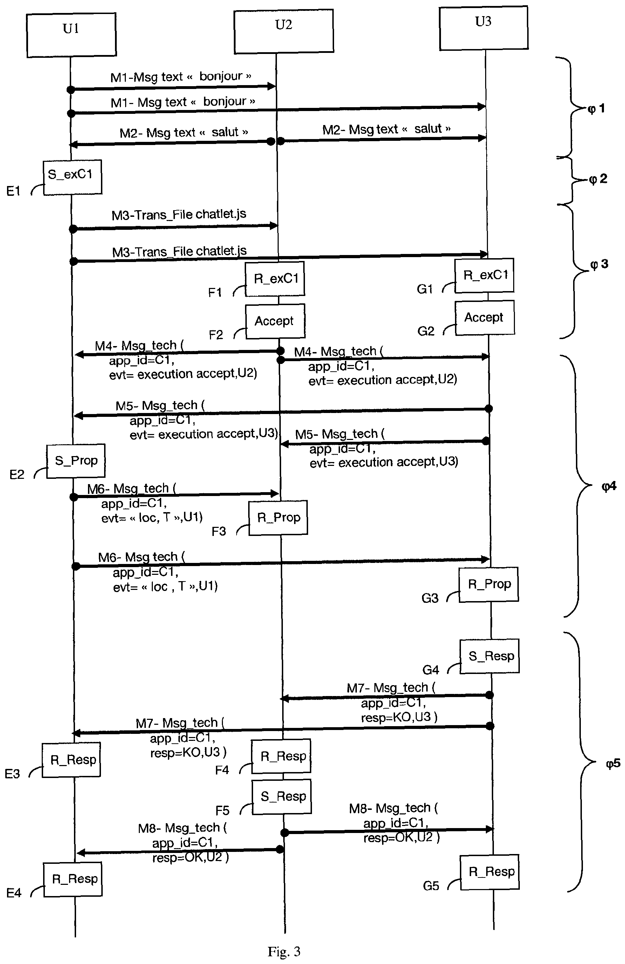

Nous allons maintenant décrire le procédé de coopération, tel qu'il est mis en œuvre par une entité cliente 10 dans un mode particulier de réalisation, en relation avec la figure 3 et les figures 2a-2e.

Dans une première phase ϕ1, une communication instantanée est établie entre les utilisateurs des entités clientes 10, 11, 12. L'application de communication instantanée est par exemple une application RCS/Joyn, en mode « One to One » ou « Group Chat » par exemple.

On se place par la suite dans le cas où un seul canal de communication instantanée est établi.

L'entité cliente 10 transmet un premier message textuel M1 à destination des deux entités clientes 11, 12, afin de les inviter à participer à une communication instantanée.

La figure 2a représente les différents écrans des entités clientes 10, 11, 12 à l'issue de cette transmission du message M1 pour l'entité cliente 10 et la réception du message M1 pour les entités clientes 11, 12.

En réponse, l'entité cliente 11 transmet un deuxième message textuel M2 à destination des entités clientes 10, 11.

Le canal de communication instantanée est alors établi entre les trois entités clientes 10, 11, 12. Tout message textuel émis par une des entités clientes s'affiche sur l'écran des autres entités clientes participant à la communication instantanée. Afin de ne pas surcharger la description, aucun autre échange de messages textuels n'est décrit dans le cadre de cet exemple illustratif. Aucune limitation n'est attachée au nombre de messages textuels échangés préalablement à la mise en œuvre des phases ultérieures.

Dans une deuxième phase ϕ2, l'utilisateur de l'entité cliente 10 sélectionne une application qu'il souhaite exécuter en coopération avec les autres entités clientes 11, 12 participant à la communication instantanée. Dans cet exemple illustratif, la même entité cliente est à l'origine de l'établissement de la communication instantanée et de la sélection de l'application à exécuter en coopération. Aucune limitation n'est attachée à cet exemple. Un utilisateur d'une autre entité cliente peut également mettre en œuvre cette deuxième phase.

Plus précisément, dans une étape El, l'utilisateur de l'entité cliente 10 sélectionne dans le menu déroulant 200 l'application à transférer aux autres entités clientes 11, 12 pour une exécution en coopération.

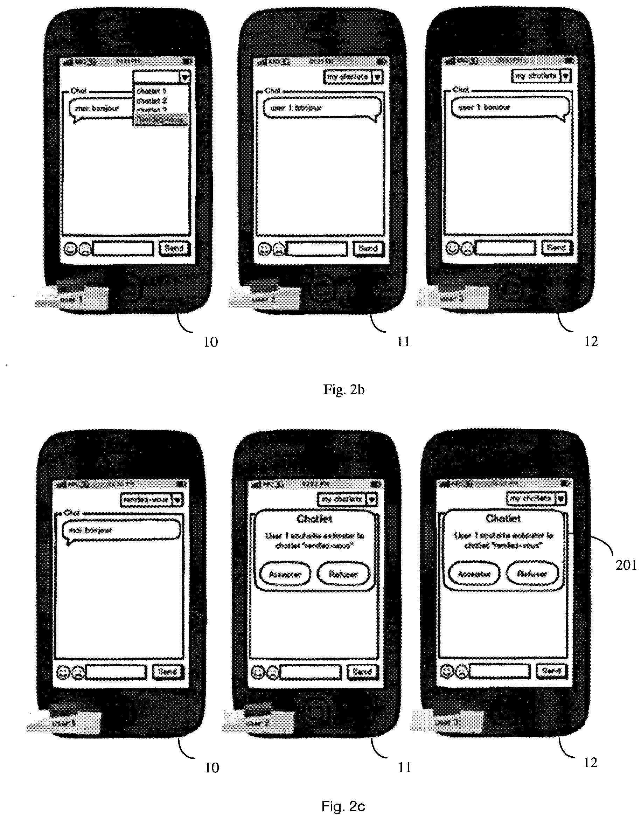

La figure 2b représente les différents écrans des entités clientes 10, 11, 12 à l'issue de cette deuxième phase. Les écrans des entités clientes 11, 12 sont inchangés. On se place par la suite dans le cas où l'utilisateur de l'entité cliente 10 sélectionne une application de rendez-vous.

Dans une troisième phase ϕ3, l'application à exécuter en coopération est partagée par l'entité cliente 10 avec les autres entités clientes 11, 12.

Plus précisément, l'entité cliente 10 transmet aux entités clientes 11, 12 l'application sélectionnée sous forme exécutable au moyen d'un message M3 de transfert de fichier. Ce transfert de fichier est par exemple réalisé au moyen de la fonctionnalité « File Transfer » définie par la norme RCS.

Le message M3 est reçu par l'entité cliente 11 dans une étape F1. Toujours dans cette étape F1, l'entité cliente 11 détermine au moyen du type de contenu que le fichier transmis est un fichier à exécuter dans le contexte de la communication instantanée.

Dans une étape F2, l'utilisateur de l'entité cliente 11 accepte ou non l'exécution du fichier transmis, c'est-à-dire de l'application reçue, au moyen de l'interface homme-machine de l'entité cliente.

L'entité cliente 12 met également en œuvre une étape G1 similaire à l'étape F1 et une étape G2 similaire à l'étape F2.

La figure 2c représente les écrans des entités clientes 10, 11, 12 à l'issue de cette troisième phase. L'utilisateur est interrogé dans une zone 201 des écrans des entités clientes 11, 12 associée à une zone réservée à la communication instantanée.

On se place par la suite dans le cas où les utilisateurs des entités clientes 11, 12 ont accepté l'exécution de l'application de rendez-vous.

Dans une quatrième phase ϕ4, l'exécution de l'application en coopération est initiée.

Plus précisément, suite à l'acceptation de l'utilisateur de l'entité cliente 11, cette dernière transmet un message technique M4, c'est-à-dire un message relatif à l'application sélectionnée, à destination des deux autres entités clientes 10, 12. Ce message technique M4 comprend notamment un identifiant de l'application app_id sélectionnée et un type d'évènement evt indiquant que l'exécution de l'application sélectionnée est acceptée. On rappelle ici que de tels messages techniques sont uniquement à destination de l'application concernée et ne sont pas affichés sur les écrans des entités clientes. L'entité client 12 transmet également un message technique M5, similaire au message technique M4, à destination des entités clientes 10, 11.

A l'issue de ces différents échanges, une application sélectionnée par un des utilisateurs a été distribuée aux autres utilisateurs participants à la communication instantanée. Ces derniers n'ont ainsi pas besoin soit de disposer préalablement de cette application sur leur terminal soit de contacter un serveur dans le réseau pour obtenir cette application. De plus, ces échanges s'effectuant dans le contexte de la communication instantanée, une relation de confiance est établie entre les différents participants. Il est également plus simple d'introduire une nouvelle application grâce à l'interface de programmation d'application : un utilisateur peut ainsi programmer une application répondant à ses besoins et la partager avec des utilisateurs participant à la communication instantanée pour une exécution en coopération.

Toujours dans cette quatrième phase ϕ4, dans une étape E2, l'utilisateur de l'entité cliente 10 renseigne la proposition de rendez-vous, par exemple le lieu et l'heure de rendez-vous, au moyen de l'interface homme-machine. L'application de rendez-vous en cours d'exécution sur l'entité cliente 10 déclenche l'envoi d'un message technique M6 à destination des deux autres entités clientes 11, 12. Ce message technique M6 comprend notamment un identifiant de l'application app_id en cours d'exécution et un type d'événement evt indiquant le lieu et l'heure du rendez-vous. Ce message technique M6 est reçu dans une étape F3 par l'entité cliente 11. L'application de rendez-vous en cours d'exécution sur l'entité cliente 11 traite ce message technique M6 et affiche dans une zone de l'écran dédiée à l'application la proposition de rendez-vous émise par l'utilisateur de l'entité cliente 10.

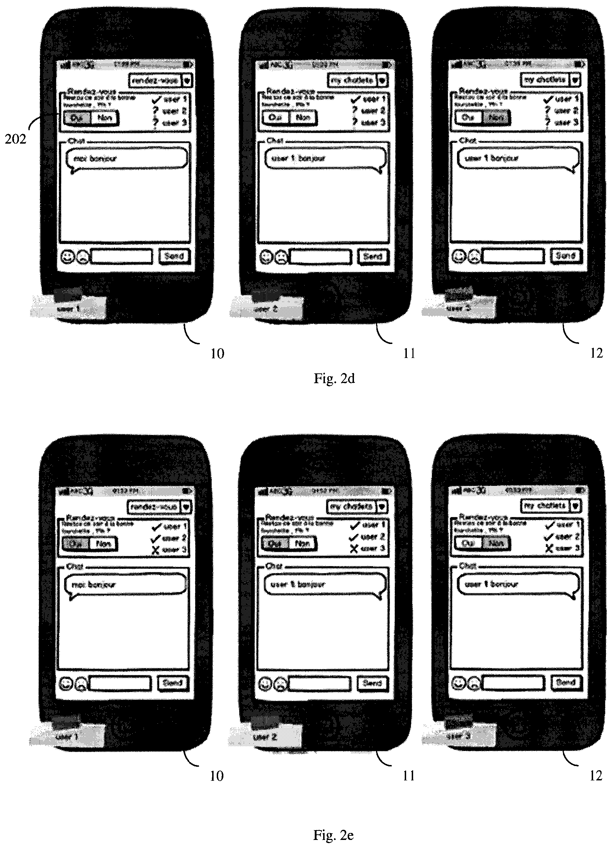

La figure 2d représente les écrans des entités clientes. La zone d'affichage 202 de l'écran est dédiée à l'interaction avec l'utilisateur. Dans un mode de réalisation particulier, cette zone 202 est distincte de la zone réservée à la communication instantanée, afin de ne pas encombrer l'historique des messages. Cette zone d'affichage 202 comprend :
- un rappel du lieu et de l'heure du rendez-vous,
- deux boutons « oui » et « non », permettant à l'utilisateur de fournir sa réponse, et
- un récapitulatif d'un accord ou non pour chaque utilisateur participant à la communication instantanée.

Le récapitulatif indique un accord, matérialisé par une case cochée, pour l'utilisateur de l'entité cliente 10 et une absence d'information, matérialisée par un point d'interrogation, pour les utilisateurs des entités clientes 11, 12.

Dans une cinquième phase ϕ5, l'exécution de l'application en coopération sur les différentes entités clientes se poursuit et fournit un résultat final.

L'entité cliente 12 transmet dans une étape G4 une réponse de son utilisateur dans un message technique M7. Le message technique M7 comprend notamment un identifiant de l'application app_id en cours d'exécution et un type d'événement evt indiquant la réponse. On se place par la suite dans le cas où la réponse de l'utilisateur de l'entité cliente 12 est négative.

Le message technique M7 est reçu par l'entité cliente 10 dans une étape E3. L'entité cliente 10 met alors à jour la zone d'affichage 202, notamment le récapitulatif, en fonction de ce message technique M7, afin d'y ajouter la réponse de l'utilisateur de l'entité cliente 12. Le message technique M7 est également reçu par l'entité cliente 11 dans une étape F4, similaire à l'étape E3. L'entité cliente 11 met alors à jour la zone d'affichage 202, notamment le récapitulatif, en fonction de ce message technique M7, afin d'y ajouter la réponse de l'utilisateur de l'entité cliente 12.

L'entité cliente 11 transmet dans une étape F4, similaire à l'étape G4, une réponse de son utilisateur dans un message technique M8. Le message technique M8 est similaire au message technique M7. On se place par la suite dans le cas où la réponse de l'utilisateur de l'entité cliente 11 est positive.

Le message technique M8 est reçu par l'entité cliente 10 dans une étape E4. L'entité cliente 10 met alors à jour la zone d'affichage 202, notamment le récapitulatif, en fonction de ce message technique M8, afin d'y ajouter la réponse de l'utilisateur de l'entité cliente 11. Le message technique M8 est également reçu par l'entité cliente 11 dans une étape G5, similaire à l'étape E4. L'entité cliente 12 met alors à jour la zone d'affichage 202, notamment le récapitulatif, en fonction de ce message technique M7, afin d'y ajouter la réponse de l'utilisateur de l'entité cliente 12.

La figure 2e représentent les écrans des entités clientes 10, 11, 12 à l'issue de cette cinquième phase. Le récapitulatif présent dans la zone d'affichage 202 indique un accord, matérialisé par une case cochée, pour les utilisateurs des entités clientes 10,11 et un refus, matérialisé par une croix, pour l'utilisateur de l'entité cliente 12. On constate ainsi que les échanges entre les entités clientes ont été effectués de manière transparente pour les différents utilisateurs et que l'affichage du récapitulatif permet à ces derniers d'obtenir le résultat final. Si les utilisateurs avaient voulu se concerter pour établir ce rendez-vous, de nombreux échanges auraient eu lieu dans la fenêtre dédiée à l'affichage des messages textuels et une vue synthétique aurait été difficile à obtenir.

D'autres modes de réalisation sont également envisageables tout en restant dans le cadre du procédé de coopération précédemment décrit.

La description a été faite pour un exemple d'application de rendez-vous. Aucune limitation n'est attachée à cette application. Le procédé de coopération peut avantageusement être mis en œuvre pour d'autres applications « chatlet », mentionnées ici à titre d'exemples non limitatifs :
- réservation de restaurant : cette application permet à des utilisateurs participant à une communication instantanée de définir puis de se retrouver physiquement dans un restaurant. L'application permet de définir le restaurant le plus proche en fonction de leurs localisations géographiques respectives et de déterminer immédiatement le nombre de participants. A titre optionnel, l'application peut prévoir une interaction avec un serveur, permettant à des restaurants partenaires de proposer des offres aux participants.
- tableau blanc : cette application permet à un utilisateur de partager une carte routière avec les autres participants et d'y indiquer la position d'un lieu d'intérêt, tel que son domicile. Un autre participant peut également y indiquer des points remarquables, permettant de se rendre au lieu d'intérêt.
- pont de conférence : un utilisateur souhaite transmettre oralement les indications permettant de rejoindre le lieu d'intérêt. Il peut initier un appel téléphonique de groupe vers les participants de la communication instantanée.
- jeu en réseau : des utilisateurs participant à une communication instantanée fournissent des réponses à un jeu, par exemple un quizz.

Les entités clientes mettant en œuvre le procédé de coopération comprennent ainsi un ensemble de fonctions :
- échange de messages relatifs à l'application « chatlet » ou messages techniques et gestion de tels messages ;
- utilisation d'une fonction de transfert de fichier pour transmettre du code exécutable ;
- exécution d'applications « chatlet », transmise le cas échéant à partir d'une autre entité cliente ;
- intégration des applications « chatlet » dans les interfaces graphiques natives.

On rappelle ici que les applications « chatlet » peuvent être développées par les entités clientes au-dessus des interfaces de programmation d'applications API RCS actuelles ou bien encore être intégrées de manière native dans la norme RCS.

Nous allons maintenant décrire une entité cliente dans un mode particulier de réalisation de l'invention en référence à la figure 4. Une telle entité cliente 10 comprend notamment :
- un module de communication 100, agencé pour communiquer avec d'autres entités clientes dans un réseau de communication ;
- un module d'interface homme-machine 106, agencé pour communiquer avec un utilisateur de l'entité cliente ;
- un module de communication instantanée 102 ;
- un module 104 d'exécution d'une application « chatlet » en coopération avec au moins une autre entité cliente participant à une communication instantanée.

Le module 102 de communication instantanée est agencé pour établir un ou plusieurs canaux de communication instantanée avec une ou plusieurs autres entités clientes, pour échanger des messages textuels entre les entités clientes participant à la communication instantanée par l'intermédiaire du ou des canaux de communication instantanée et pour partager des fichiers entre elles.

Le module 102 de communication instantanée est en outre agencé pour envoyer une application exécutable mémorisée dans une zone mémoire à une autre entité cliente par l'intermédiaire du ou d'un des canaux de communication instantanée et pour requérir une exécution de cette application en coopération avec une exécution de celle-ci sur l'autre entité cliente. Il est bien entendu que lorsque plus de trois entités clientes participent à la communication instantanée, le module 102 est agencé pour envoyer l'application exécutable à chacune des autres entités clientes participant à la communication instantanée et le module 104 est agencé pour exécuter l'application en coopération pour l'ensemble des entités clientes participant à la communication instantanée.

Dans un mode de réalisation particulier, le module 102 de communication instantanée est en outre agencé pour transmettre un message technique reçu d'une autre entité cliente au module 104 d'exécution de l'application « chatlet ».

Le module 102 de communication instantanée est en outre agencé pour recevoir une application exécutable d'une autre entité cliente par l'intermédiaire du ou d'un des canaux de communication instantanée et pour requérir une exécution de cette application en coopération avec une exécution de celle-ci sur l'autre entité cliente. Lorsque plus de trois entités clientes participent à la communication instantanée, l'exécution de cette application s'effectue pour l'ensemble des entités clientes participant à la communication instantanée.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 102, 104 sont agencés pour mettre en œuvre le procédé précédemment décrit. Il s'agit de préférence de modules logiciels comprenant des instructions logicielles pour faire exécuter les étapes du procédé de coopération précédemment décrit, mises en œuvre par une entité cliente. L'invention concerne donc aussi :
- un programme pour une entité cliente, comprenant des instructions de code de programme destinées à commander l'exécution des étapes du procédé de coopération précédemment décrit, lorsque ledit programme est exécuté par ladite entité cliente ;
- un support d'enregistrement lisible par une entité cliente sur lequel est enregistré le programme pour une entité cliente.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système 1 comprenant une pluralité d'entités clientes communiquant entre elles par l'intermédiaire d'au moins un canal de communication instantanée établi entre les entités clientes de ladite pluralité. Dans ce système, les entités clientes comprennent :
- un module 102 de communication instantanée, agencé pour communiquer avec au moins une autre entité cliente par l'intermédiaire d'au moins un canal de communication instantanée établi,
- un module 104 d'exécution, agencé pour exécuter une application en coopération avec une exécution de ladite application sur l'autre entité cliente.

Une première entité cliente comprend en outre un module 100 d'envoi, agencé pour envoyer une application exécutable à au moins une deuxième entité cliente par l'intermédiaire du ou d'un des canaux de communication instantanée.

La deuxième entité cliente comprend un module de réception, agencé pour recevoir de la première entité cliente par l'intermédiaire du ou des canaux de communication instantanée cette application exécutable à exécuter en coopération avec la première entité cliente, et le cas échéant d'autres deuxièmes entités clientes participant à la communication instantanée.

## Revendications

1. Procédé de coopération entre une pluralité d'entités clientes (10, 11, 12) communiquant entre elles par l'intermédiaire d'au moins un canal de communication instantanée établi entre les entités clientes de ladite pluralité, ledit procédé comprenant les étapes suivantes mises en œuvre par une première entité cliente de ladite pluralité :
- envoi (E1) d'une application exécutable à au moins une deuxième entité cliente de ladite pluralité ;
- exécution (ϕ5) de ladite application en coopération avec une exécution de ladite application sur la deuxième entité cliente,
**caractérisé en ce que** l'application exécutable est envoyée par l'intermédiaire dudit au moins un canal de communication instantanée et **en ce que** la coopération entre l'application en cours d'exécution sur la première entité cliente et celle en cours d'exécution sur la deuxième entité cliente s'effectue au moyen de messages relatifs à l'application (M4-M8) et transmis par l'intermédiaire dudit au moins un canal de communication instantanée.

2. Procédé de coopération selon la revendication 1, dans lequel les messages relatifs à l'application sont uniquement traités par l'application.

3. Procédé de coopération selon la revendication 1, dans lequel l'application exécutable est transférée sous la forme d'un fichier indiquant qu'il contient du code exécutable.

4. Entité cliente (10, 11, 12) comprenant :
- un module (102) de communication instantanée, agencé pour communiquer avec au moins une autre entité cliente par l'intermédiaire d'au moins un canal de communication instantanée établi ;
- un module (100) d'envoi, agencé pour envoyer une application exécutable à ladite au moins une autre entité cliente ;
- un module (104) d'exécution, agencé pour exécuter une application en coopération avec une exécution de ladite application sur ladite au moins une autre entité cliente,
**caractérisé en ce que** l'application exécutable est envoyée par l'intermédiaire dudit au moins un canal de communication instantanée et **en ce que** la coopération entre l'application en cours d'exécution sur la première entité cliente et celle en cours d'exécution sur la deuxième entité cliente s'effectue au moyen de messages relatifs à l'application (M4-M8) et transmis par l'intermédiaire dudit au moins un canal de communication instantanée.

5. Entité cliente selon la revendication 4, comprenant en outre un module de réception, agencé pour recevoir d'une autre entité cliente par l'intermédiaire d'un canal de communication instantanée une application exécutable à exécuter en coopération avec ladite autre entité cliente.

6. Système comprenant une pluralité d'entités clientes communiquant entre elles par l'intermédiaire d'au moins un canal de communication instantanée établi entre les entités clientes de ladite pluralité, dans lequel lesdites entités clientes comprennent :
- un module (102) de communication instantanée, agencé pour communiquer avec au moins une autre entité cliente par l'intermédiaire d'au moins un canal de communication instantanée établi,
- un module (104) d'exécution, agencé pour exécuter une application en coopération avec une exécution de ladite application sur l'autre entité cliente, ,
et dans lequel une entité cliente comprend en outre un module (100) d'envoi, agencé pour envoyer une application exécutable à une autre entité cliente et l'autre entité cliente comprend un module de réception, agencé pour recevoir de l'entité cliente ladite application exécutable à exécuter en coopération avec l'entité cliente,
**caractérisé en ce que** l'application exécutable est envoyée par l'intermédiaire dudit au moins un canal de communication instantanée et **en ce que** la coopération entre l'application en cours d'exécution sur la première entité cliente et celle en cours d'exécution sur la deuxième entité cliente s'effectue au moyen de messages relatifs à l'application (M4-M8) et transmis par l'intermédiaire dudit au moins un canal de communication instantanée.

7. Programme pour une entité cliente, comprenant des instructions de code de programme destinées à commander l'exécution des étapes du procédé selon l'une des revendications 1 à 3, lorsque ledit programme est exécuté par ladite entité cliente.

8. Support d'enregistrement lisible par une entité cliente sur lequel est enregistré le programme selon la revendication 7.

## Patentansprüche

1. Verfahren zur Zusammenarbeit zwischen einer Vielzahl von Client-Einheiten (10, 11, 12), die über wenigstens einen Kanal zur sofortigen Kommunikation miteinander kommunizieren, der zwischen den Client-Einheiten der Vielzahl eingerichtet ist, wobei das Verfahren die folgenden Schritte umfasst, die von einer ersten Client-Einheit der Vielzahl durchgeführt werden::
- Senden (E1) einer ausführbaren Anwendung an wenigstens eine zweite Client-Einheit der Vielzahl;
- Ausführung (ϕ5) der Anwendung in Zusammenarbeit mit einer Ausführung der Anwendung auf der zweiten Client-Einheit,
**dadurch gekennzeichnet, dass** die ausführbare Anwendung über den wenigstens einen Kanal zur sofortigen Kommunikation gesendet wird, und dadurch, dass die Zusammenarbeit zwischen der Anwendung, die sich auf der ersten Client-Einheit in Ausführung befindet, und derjenigen, die sich auf der zweiten Client-Einheit in Ausführung befindet, mittels Nachrichten erfolgt, die sich auf die Anwendung beziehen (M4-M8) und über den wenigstens einen Kanal zur sofortigen Kommunikation übertragen werden.

2. Verfahren zur Zusammenarbeit nach Anspruch 1, wobei die Nachrichten, die sich auf die Anwendung beziehen, ausschließlich von der Anwendung verarbeitet werden.

3. Verfahren zur Zusammenarbeit nach Anspruch 1, wobei die ausführbare Anwendung in Form einer Datei übertragen wird, die anzeigt, dass sie ausführbaren Code enthält.

4. Client-Einheit (10, 11, 12), welche umfasst:
- ein Modul (102) zur sofortigen Kommunikation, das dafür ausgelegt ist, mit wenigstens einer anderen Client-Einheit über wenigstens einen eingerichteten Kanal zur sofortigen Kommunikation zu kommunizieren;
- ein Sendemodul (100), das dafür ausgelegt ist, eine ausführbare Anwendung an die wenigstens eine andere Client-Einheit zu senden;
- ein Ausführungsmodul (104), das dafür ausgelegt ist, eine Anwendung in Zusammenarbeit mit einer Ausführung der Anwendung auf der wenigstens einen anderen Client-Einheit auszuführen,
**dadurch gekennzeichnet, dass** die ausführbare Anwendung über den wenigstens einen Kanal zur sofortigen Kommunikation gesendet wird, und dadurch, dass die Zusammenarbeit zwischen der Anwendung, die sich auf der ersten Client-Einheit in Ausführung befindet, und derjenigen, die sich auf der zweiten Client-Einheit in Ausführung befindet, mittels Nachrichten erfolgt, die sich auf die Anwendung beziehen (M4-M8) und über den wenigstens einen Kanal zur sofortigen Kommunikation übertragen werden.

5. Client-Einheit nach Anspruch 4, welche außerdem ein Empfangsmodul umfasst, das dafür ausgelegt ist, von einer anderen Client-Einheit über einen Kanal zur sofortigen Kommunikation eine ausführbare Anwendung zu empfangen, die in Zusammenarbeit mit der anderen Client-Einheit auszuführen ist.

6. System, welches eine Vielzahl von Client-Einheiten umfasst, die über wenigstens einen Kanal zur sofortigen Kommunikation miteinander kommunizieren, der zwischen den Client-Einheiten der Vielzahl eingerichtet ist, wobei die Client-Einheiten umfassen:
- ein Modul (102) zur sofortigen Kommunikation, das dafür ausgelegt ist, mit wenigstens einer anderen Client-Einheit über wenigstens einen eingerichteten Kanal zur sofortigen Kommunikation zu kommunizieren,
- ein Ausführungsmodul (104), das dafür ausgelegt ist, eine Anwendung in Zusammenarbeit mit einer Ausführung der Anwendung auf der anderen Client-Einheit auszuführen,
und wobei eine Client-Einheit außerdem ein Sendemodul (100) umfasst, das dafür ausgelegt ist, eine ausführbare Anwendung an eine andere Client-Einheit zu senden, und die andere Client-Einheit ein Empfangsmodul umfasst, das dafür ausgelegt ist, von der Client-Einheit die ausführbare Anwendung zu empfangen, die in Zusammenarbeit mit der Client-Einheit auszuführen ist,
**dadurch gekennzeichnet, dass** die ausführbare Anwendung über den wenigstens einen Kanal zur sofortigen Kommunikation gesendet wird, und dadurch, dass die Zusammenarbeit zwischen der Anwendung, die sich auf der ersten Client-Einheit in Ausführung befindet, und derjenigen, die sich auf der zweiten Client-Einheit in Ausführung befindet, mittels Nachrichten erfolgt, die sich auf die Anwendung beziehen (M4-M8) und über den wenigstens einen Kanal zur sofortigen Kommunikation übertragen werden.

7. Programm für eine Client-Einheit, welches Programmcodeanweisungen umfasst, die dazu bestimmt sind, die Ausführung der Schritte des Verfahrens nach einem der Ansprüche 1 bis 3 zu steuern, wenn das Programm von der Client-Einheit ausgeführt wird.

8. Aufzeichnungsmedium, das von einer Client-Einheit lesbar ist und auf dem das Programm nach Anspruch 7 aufgezeichnet ist.

## Claims

1. Method of cooperation between a plurality of client entities (10, 11, 12) communicating with one another by way of at least one instant-communication channel established between the client entities of said plurality, said method comprising the following steps implemented by a first client entity of said plurality:
- sending (E1) an executable application to at least one second client entity of said plurality;
- executing (ϕ5) said application in cooperation with an execution of said application on the second client entity,
**characterized in that** the executable application is sent by way of said at least one instant-communication channel and **in that** the cooperation between the application currently being executed on the first client entity and that currently being executed on the second client entity is performed by means of messages relating to the application (M4-M8) and transmitted by way of said at least one instant-communication channel.

2. Method of cooperation according to Claim 1, in which the messages relating to the application are solely processed by the application.

3. Method of cooperation according to Claim 1, in which the executable application is transferred in the form of a file indicating that it contains executable code.

4. Client entity (10, 11, 12) comprising:
- an instant-communication module (102), designed to communicate with at least one other client entity by way of at least one established instant-communication channel;
- a sending module (100), designed to send an executable application to said at least one other client entity;
- an execution module (104), designed to execute an application in cooperation with an execution of said application on said at least one other client entity,
**characterized in that** the executable application is sent by way of said at least one instant-communication channel and **in that** the cooperation between the application currently being executed on the first client entity and that currently being executed on the second client entity is performed by means of messages relating to the application (M4-M8) and transmitted by way of said at least one instant-communication channel.

5. Client entity according to Claim 4, further comprising a reception module, designed to receive from another client entity by way of an instant-communication channel an executable application to be executed in cooperation with said other client entity.

6. System comprising a plurality of client entities communicating with one another by way of at least one instant-communication channel established between the client entities of said plurality, in which said client entities comprise:
- an instant-communication module (102), designed to communicate with at least one other client entity by way of at least one established instant-communication channel,
- an execution module (104), designed to execute an application in cooperation with an execution of said application on the other client entity,
and in which a client entity further comprises a sending module (100), designed to send an executable application to another client entity and the other client entity comprises a reception module, designed to receive from the client entity said executable application to be executed in cooperation with the client entity,
**characterized in that** the executable application is sent by way of said at least one instant-communication channel and **in that** the cooperation between the application currently being executed on the first client entity and that currently being executed on the second client entity is performed by means of messages relating to the application (M4-M8) and transmitted by way of said at least one instant-communication channel.

7. Program for a client entity, comprising program code instructions intended to control the execution of the steps of the method according to one of Claims 1 to 3, when said program is executed by said client entity.

8. Recording medium readable by a client entity and on which the program according to Claim 7 is recorded.
